# EUROPÄISCHE PATENTSCHRIFT

(11) **EP 3 504 774 B1**
(45) Veröffentlichungstag und Bekanntmachung des Hinweises auf die Patenterteilung: **07.10.2020**
(21) Anmeldenummer: 17746105.0
(22) Anmeldetag: 01.08.2017
(51) Int. Cl.: H02K 1/30, H02K 1/32, H02K 9/19, H02K 15/02, H02K 17/16

(54) **KURZSCHLUSSLÄUFER FÜR EINE ASYNCHRONMASCHINE**
SHORT-CIRCUIT ROTOR FOR AN ASYNCHRONOUS MACHINE
ROTOR EN COURT CIRCUIT POUR UNE MACHINE ASYNCHRONE

(30) Priorität: 25.08.2016 DE 102016216027
(43) Veröffentlichungstag der Anmeldung: 03.07.2019
(73) Patentinhaber: Vitesco Technologies GmbH, 30165 Hannover (DE)
(72) Erfinder: FRÖHLICH, Holger, 13127 Berlin (DE); FUKUMOTO, Isao, 14167 Berlin (DE)
(74) Vertreter: Waldmann, Georg Alexander
(86) Internationale Anmeldenummer: PCT/EP2017/069396
(87) Internationale Veröffentlichungsnummer: WO 2018/036760

(56) Entgegenhaltungen:
- WO-A1-2006/064860
- CH-A- 90 015
- DE-A1-102012 110 157
- DE-A1-102015 014 535
- JP-U- S57 146 739
- US-A1- 2011 024 073

## Beschreibung

Die Erfindung betrifft einen Kurzschlussläufer für eine Asynchronmaschine. Weitere Ansprüche sind auf eine Asynchronmaschine mit dem Kurzschlussläufer sowie auf ein Verfahren zur Herstellung des Kurzschlussläufers gerichtet.

Zahlreiche neue Anwendungen und Märkte in der Elektromobilität bedingen neue Herausforderungen an die Konstruktion elektrischer Antriebsstränge. Bisherige Methoden zur Entwicklung des elektrischen Antriebsstrangs für die Industrie reichen für Anwendungen in der Elektromobilität nicht aus. Wesentliche Unterschiede sind die Art der Spannungsversorgung, die bei Fahrantrieben in der Regel durch Batterien dargestellt wird, der begrenzte zur Verfügung stehende Bauraum, die Dynamik bzw. das Betriebsverhalten sowie der Wunsch nach einem möglichst geringen Gewicht zur Energieeinsparung.

Insbesondere die Dynamik, Leistungsanforderungen, Betriebsverhalten und Stückkosten sind herausragende Kriterien, die einen Antriebsstrang für Fahrantriebe von jenen in der Industrie unterscheiden. Die Entwicklung eines elektrischen Antriebsstrangs für die Elektromobilität erfordert deshalb einige zusätzliche Betrachtungen verglichen mit einer Industrieanwendung. Bei Fahrzeugantrieben, bei denen die rotatorischen und translatorischen Massen der Elektromotoren den Energiebedarf und damit die Batteriegröße maßgeblich bestimmen, besteht die Notwendigkeit, die Massen so gering wie möglich zu halten. D.h., dass der Rotor bzw. der Läufer der elektrischen Maschine mit einem möglichst geringen Massenträgheitsmoment ausgestattet sein sollte.

Allerdings verfügen bekannte, auf dem Markt erhältliche Elektroantriebe überwiegend über einteilige Wellen mit geringem Durchmesser. Zwar haben bei dieser Bauform die Wellen kein hohes Gewicht, bauartbedingt jedoch der Gesamtrotor mit den montierten Blechpaketen. Ein bekannter Ansatz bzw. Stand der Technik zur Gewichtsreduzierung ist in diesem Zusammenhang, die Teilbereiche der inaktiven Blechzonen auszustanzen.

Aus der JP S57 146739 U ist ein Kurzschlussläufer gemäß dem Oberbegriff des Anspruchs 1 sowie ein Verfahren zur Herstellung eines Kurzschlussläufers gemäß dem Oberbegriff des Anspruchs 8 bekannt, bei der ein Füllkörper an ein Blechpaket angegossen ist, und durch den Füllkörper eine Rotorwelle geführt ist.

Die WO 2006/064860 A1 zeigt einen Motor mit einer zweifach isolierten Struktur. Dabei ist auf einer Rotorwelle ein Blechpaket angeordnet, wobei zwischen dem Blechpaket und der Rotorwelle ein Isolationskörper angeordnet ist.

Die CH 90 015 A beschreibt einen Käfiganker, dessen Kurzschlussringe angegossen sind.

Die US 2011/024073 A1 bezieht sich auf eine Vorrichtung zur Herstellung eines Rotors für eine rotierende elektrische Maschine. Dabei ist vorgesehen, dass für den Füllanguss an den Rotorkern eine mehrteilige Form in den hohlzylinderförmig ausgebildeten Rotorkern angeordnet wird.

Die DE 10 2015 014535 A1 zeigt eine elektrische Maschine für einen Kraftwagen mit einem Blechpaket und einem innerhalb des Blechpakets ausgebildeten Kanal zum Führen eines Kühlmittels.

Aus der DE 10 2012 110 157 A1 ist ein Rotor für eine Asynchronmaschine bekannt, wobei der Rotor ein Blechlamellenpaket aufweist, an dem stirnseitig Endscheiben mit Zentriermitteln zur Zentrierung der Endscheiben zur Rotorachse angeordnet sind.

Es ist eine Aufgabe der vorliegenden Erfindung, einen Kurzschlussläufer, eine Asynchronmaschine und ein Verfahren der eingangs genannten Art bereitzustellen, welche eine Gewichtsreduzierung des Rotors ermöglichen.

Die Aufgabe wird erfindungsgemäß gelöst durch die Gegenstände der unabhängigen Patentansprüche. Vorteilhafte Ausführungsformen der Erfindung sind Gegenstand der abhängigen Ansprüche.

In einem ersten Aspekt der Erfindung wird ein Kurzschlussläufer für eine Asynchronmaschine gemäß Anspruch 1 bereitgestellt.

Der erfindungsgemäße Kurzschlussläufer weist abweichend vom Stand der Technik eine Architektur auf, mit der sich auf einen aktiv magnetflusslenkenden Blechpaketquerschnitt beschränkt werden kann, wodurch eine signifikante Gewichtsreduzierung des Kurzschlussläufers und eine Senkung dessen Massenträgheitsmoments ermöglicht wird. Dabei kann ein Durchmesser einer zentralen Bohrung innerhalb des Rotorblechpakets besonders groß gewählt werden. Auf ein aktives Füllmaterial eines Blechzuschnitts zwischen einer Rotorwelle und aktivem Blechmaterial des Rotorblechpakets kann hingegen verzichtet werden. Stattdessen kann bei einem Angießen von Kurzschlussringen und Kurzschlussstäben an das Rotorblechpaket auch der Bereich der ehemals inaktiven Blechzone mit einer Schmelze, insbesondere mit einer Leichtmetalllegierung, z.B. mit einer Aluminium-Druckgusslegierung, zumindest teilweise ausgegossen werden, wodurch der Füllkörper gebildet wird.

Der Füllkörper erfüllt insbesondere die Funktion, Momente zwischen den Wellenzapfen und dem Rotorblechpaket zu übertragen. Dazu kann der Füllkörper derart an das Rotorblechpaket angegossen sein, dass der Füllkörper formschlüssig mit dem Rotorblechpaket verbunden ist. Weiterhin können die Wellenzapfen formschlüssig und kraftschlüssig mit dem Füllkörper verbunden sein. Vorteilhaft ist hierbei, dass auf eine durchgehende Welle verzichtet werden kann, und stattdessen ein übertragbares Drehmoment über die zwei Wellenzapfen gewährleistet werden kann.

Der Kurzschlussläufer gemäß dem ersten Aspekt der Erfindung zeichnet sich durch ein besonders geringes rotatorisches Massenträgheitsmoment aus. Das besonders geringe Gewicht des Kurschlussläufers ist von besonderem Wert für die Antriebseffizienz, da es sich bei dem Kurzschlussläufer um ein rotierendes Bauteil handelt, denn das rotatorische Massenträgheitsmoment des Kurzschlussläufers kann bei dieser Bauweise um mindestens 10 % gesenkt werden. Dieser Faktor bietet für das Betriebsverhalten wichtige Effizienzvorteile.

Erfindungsgemäß weist der erste Wellenzapfen eine erste axiale Bohrung auf, der zweite Wellenzapfen weist eine zweite axiale Bohrung auf, und der Füllkörper weist eine dritte axiale Bohrung auf, wobei die dritte axiale Bohrung die erste axiale Bohrung mit der zweiten axialen Bohrung verbindet, sodass die erste Bohrung, die zweite Bohrung und die dritte Bohrung gemeinsam einen Kühlkanal ausbilden, welcher durch den ersten Wellenzapfen, den Füllkörper und den zweiten Wellenzapfen verläuft. Somit wird ein Kühlflüssigkeitskanal durch die Montage der Wellenzapfen an dem Füllkörper erzeugt. Dabei weisen die Wellenzapfen jeweils eine axiale Bohrung auf, welche zusammen mit einer axialen Bohrung des Füllkörpers den Kühlflüssigkeitskanal bilden. Der Kühlflüssigkeitskanal ermöglicht insbesondere eine direkte Kühlung der Wellenzapfen und des Füllkörpers.

Der Kurzschlussläufer kann weiterhin einen ersten Kurschlussring und einen zweiten Kurzschlussring umfassen, wobei der erste Wellenzapfen wenigstens eine erste radiale Bohrung aufweist, und der zweite Wellenzapfen wenigstens eine zweite radiale Bohrung aufweist. Die wenigstens eine erste radiale Bohrung kann mit der ersten axialen Bohrung verbunden sein, und die wenigstens eine zweite radiale Bohrung kann mit der zweiten axialen Bohrung verbunden sein. Der erste Kurzschlussring kann die wenigstens eine erste radiale Bohrung radial umgeben, und der zweite Kurzschlussring kann die wenigstens eine zweite radiale Bohrung radial umgeben, sodass bei einer Rotation der Wellenzapfen ein Kühlmedium aus den radialen Bohrungen radial nach außen in Richtung der Kurzschlussringe geschleudert werden kann und die Kurzschlussringe kühlen kann.

Die wenigstens eine erste radiale Bohrung und die wenigstens eine zweite radiale Bohrung verbinden die erste/zweite axiale Bohrung des ersten/zweiten Wellenzapfens mit dem Außenumfang des ersten/zweiten Wellenzapfens. Statt einer einzigen ersten radialen Bohrung und einer einzigen zweiten Bohrung können auch mehrere erste und zweite radiale Bohrungen vorgesehen sein, welche insbesondere um den Umfang der der Wellenzapfen verteilt sind. Durch die in dem vorstehenden Absatz genannten Merkmale wird eine intensive Kühlung der Kurzschlussringe ermöglicht, wobei die Maßnahmen für die Kühlung den Wirkungsgrad der Asynchronmaschine nicht wesentlich herabsetzen und nicht zulasten des Bauraums der Asynchronmaschine gehen. Besonders geeignet ist das vorstehend beschriebene Kühlprinzip in Getriebe-integrierten Elektromaschinen (GEM), welche unterstützend zu einem Verbrennungsmotor wirken, und in Traktions-Elektromaschinen (TEM), welche allein einen Vortrieb eines Kraftfahrzeugs übernehmen können.

Eine Asynchronmaschine mit einem vorstehend beschriebenen Kühlsystem lässt sich bei maximaler Dauerleistungsaufnahme außerordentlich klein und kompakt realisieren, da die Kühlung von Statorwickelköpfen und des Rotorblechpaket über eine Kühlflüssigkeit, insbesondere eine elektrisch isolierende Kühlflüssigkeit, z.B. ein Öl oder einen Ölnebel, erfolgen kann. Dabei bilden die radialen Bohrungen in den Wellenzapfen Düsen, womit die Kühlflüssigkeit mittels Fliehkraft so verteilt werden kann, dass die Kurzschlussringe des Rotors und die Wickelköpfe des Stators der Asynchronmaschine gekühlt werden können. Das Kühlprinzip schließt dabei die Kühlung rotierender und feststehender Komponenten der Asynchronmaschine in einem geschlossenen Gehäuse ein.

Die bevorzugt elektrisch isolierende Kühlflüssigkeit kann demnach über die Wellenzapfen und den Füllkörper jeweils in den Bereich der Stirnseiten des Rotors geleitet werden, wo die Kühlflüssigkeit durch die Fliehkraft an die Kurzschlussringe geschleudert wird und den Rotor über den "Hotspot Kurzschlussring" kühlt. Der Kurzschlussring besteht bevorzugt aus einer Aluminium-Druckgusslegierung und besitzt somit eine besonders hohe Wärmeleitfähigkeit.
Gemäß einer weiteren Ausführungsform ist vorgesehen, dass das Rotorblechpaket in axialer Richtung formschlüssig und kraftschlüssig mit dem Füllkörper verbunden ist. Der Füllkörper kann gemäß dieser Ausführungsform eine Klammerfunktion für die einzelnen Bleche des Rotorblechpakets übernehmen. Insbesondere kann der Füllkörper derart an das Rotorblechpaket angegossen sein, dass das Rotorblechpaket in einer umfänglichen Ausnehmung des Füllkörpers aufgenommen ist, wobei die Ausnehmung begrenzende Endabschnitte des Füllkörpers eine Verschiebung des Rotorblechpakets in axialer Richtung verhindern und das Rotorblechpaket in axialer Richtung kraftschlüssig zusammenhalten/verklammern können.

Die Wellenzapfen können jeweils einen stirnseitig angeordneten Ansatz zur Zentrierung aufweisen. Der Ansatz kann in eine korrespondierende Ausnehmung innerhalb des Füllkörpers gesteckt werden, wodurch der jeweilige Zapfen gegenüber dem Füllkörper ausgerichtet und damit zentriert werden kann.
Weiterhin können die Wellenzapfen jeweils eine stirnseitig angeordnete Endscheibe zur Befestigung mit dem Füllkörper aufweisen. Die Endscheibe dient als ein Befestigungsflansch und ermöglicht eine besonders belastbare und haltbare Verbindung der Wellenzapfen mit dem Füllkörper.
Gemäß einer weiteren Ausführungsform ist vorgesehen, dass der Füllkörper wenigstens drei sich in radialer Richtung erstreckende Speichen ausbildet. Die Speichen können derart ausgestaltet sein, dass sie einen äußeren Bereich des Füllkörpers mit einem inneren Bereich des Füllkörpers verbinden, wobei der äußere Bereich mit dem Rotorblechpaket verbunden ist und wobei der innere Bereich mit dem ersten Wellenzapfen und/oder dem zweiten Wellenzapfen verbunden ist. Zwischen den Speichen kann auf Materialeinbringung verzichtet werden, wodurch der Füllkörper bei hoher Stabilität ein besonders geringes Gewicht aufweisen kann.
Gemäß einem zweiten Aspekt der Erfindung wird eine Asynchronmaschine, insbesondere ein Asynchronmotor, bereitgestellt. Die Asynchronmaschine umfasst einen Kurzschlussläufer gemäß Z Anspruch 1 Weiterhin umfasst die Asynchronmaschine einen Stator, einen ersten Statorwickelkopf und einen zweiten Statorwickelkopf. Der erste Statorwickelkopf umgibt den ersten Kurzschlussring, und der zweite Statorwickelkopf umgibt den zweiten Kurzschlussring, sodass bei einer Rotation der Wellenzapfen ein Kühlmedium aus den radialen Bohrungen radial nach außen in Richtung der Statorwickelköpfe geschleudert werden kann und die Statorwickelköpfe kühlen kann.
Die radialen Bohrungen der Wellenzapfen ermöglichen somit, dass bei einer Rotation der Wellenzapfen aus den radialen Bohrungen herausgeschleuderte, bevorzugt elektrisch isolierende Kühlflüssigkeit in Richtung und bevorzugt auch auf die Statorwickelköpfe geleitet werden kann und dort den Stator über den "Hotspot Statorwickelkopf" kühlen kann. Der Statorwickelkopf besteht typischerweise aus einer Kupferwicklung und besitzt damit eine besonders hohe Wärmeleitfähigkeit. Die erfindungsgemäße Asynchronmaschine kann beispielsweise mit einem Öl oder einem Ölnebel als Kühlmittel gekühlt werden, und neben einem von dem Kühlmittel durchströmten Wärmetauscher eine direkte Kühlung insbesondere der Wellenzapfen, des Füllkörpers an einem Innenumfang des Rotorblechpakets, der Kurzschlussringe des Kurzschlussläufers und der Statorwickelköpfe des Stators der Asynchronmaschine aufweisen.

In einem dritten Aspekt der Erfindung wird ein Verfahren zur Herstellung eines Kurzschlussläufers gemäß Anspruch 1 bereitgestellt. wobei der Kurzschlussläufer insbesondere einen ersten Kurzschlussring, einen zweiten Kurzschlussring und mehrere Kurzschlussstäbe umfasst, das Rotorblechpaket Nuten für die Kurzschlussstäbe ausbildet, und die Kurschlussstäbe jeweils mit dem ersten Kurzschlussring und dem zweiten Kurzschlussring verbunden sind. Das Verfahren umfasst ein Bereitstellen des Rotorblechpakets, ein Herstellen der Kurzschlussstäbe durch Füllen der Nuten mit einer Schmelze, insbesondere aus einer Leichtmetalllegierung, z.B. einer Aluminium-Legierung, mittels Druckgießen, ein Herstellen der Kurzschlussringe durch Angießen einer Schmelze, insbesondere aus einer Leichtmetalllegierung, z.B. einer Aluminium-Legierung, an das Rotorblechpaket und an die Kurzschlussstäbe, ein Herstellen des Füllkörpers durch Angießen einer Schmelze, insbesondere aus einer Leichtmetalllegierung, z.B. einer Aluminium-Legierung, an das Rotorblechpaket, sodass das Rotorblechpaket drehfest auf dem Füllkörper gelagert ist, und ein Befestigen des Füllkörpers an den Wellenzapfen mittels Befestigungsmitteln.

Gemäß dem erfindungsgemäßen Verfahren wird somit ein Rotorblechpaket paketiert, wobei das Rotorblechpaket mit Hohlräumen bzw. Nuten für die Kurzschlussstäbe versehen ist. Die Nuten des Rotorblechpaket bilden Kanäle, wobei eine Druckgussvorrichtung an einem stirnseitigen Ende des Rotorblechpaket platziert werden kann und die Kanäle beispielsweise durch einen Durchlass (in der Druckgussvorrichtung) mit einer Schmelze insbesondere aus einer Leichtmetalllegierung, z.B. einer Aluminium-Druckgusslegierung gefüllt werden können, wobei die mit erstarrte Schmelze gefüllten Kanäle die Kurzschlussstäbe des Kurzschlussläufers bilden. Zusätzlich werden die Kurzschlussringe und der Füllkörper an das Rotorblechpaket an geformt bzw. angegossen.

Das Angießen der Leichtmetalllegierung erfolgt dabei derart, dass die Kurzschlussstäbe und die Kurzschlussringe mechanisch und elektrisch nicht mit dem Füllkörper verbunden sind. Bei der Leichtmetalllegierung, welche zum Herstellen der Kurzschlussstäbe verwendet werden, handelt es sich weiterhin bevorzugt um die gleiche Leichtmetalllegierung, welche zum Herstellen des ersten Kurzschlussrings und des zweiten Kurzschlussrings verwendet wird. Der Füllkörper kann insbesondere derartig an das Rotorblechpaket angegossen sein und mit den Wellenzapfen verbunden sein, dass die Wellenzapfen formschlüssig und kraftschlüssig mit dem Rotorblechpaket verbunden sind.

Besonders vorteilhaft an dem Verfahren gemäß Anspruch 8 ist, dass eine Welle-Nabe-Verbindung durch einen Formschluss und einen Kraftschluss der Wellenzapfen über einen angegossenen Füllkörper hergestellt werden kann. Neben den allgemeinen Vorteilen, welche die Verfahren wie Druckgießen mit sich bringen, ist weiterhin eine besonders hohe Funktionsintegration möglich, d.h. die Herstellung einer formschlüssigen und kraftschlüssigen Verbindung zu den Wellenzapfen sowie die Gewichtsreduktion und Kostenreduktion bei der Herstellung der hybriden Komponenten des Kurzschlussläufers. Insbesondere ist eine Kostenreduktion durch die Möglichkeit gegeben, die einzelnen Elemente des Kurzschlussläufers kostenoptimiert in Segmentbauweise herzustellen. Weiterhin können Kosten reduziert werden, indem das Rotorblechpaket spiralförmig aufgebaut wird. In diesem Zusammenhang ist es bekannt, zur Herstellung ringförmiger oder spiralförmig gebundener einen geraden Streifen aus Elektroblech, der seitliche Ausstand Zungen für die Bildung von Wicklung Nuten aufweist, über seine gesamte Länge in der Streifenebene zu verbiegen.
Im Folgenden werden Ausführungsbeispiele der Erfindung anhand der schematischen Zeichnung näher erläutert, wobei gleiche oder ähnliche Elemente mit gleichen Bezugszeichen versehen sind.

Hierbei zeigt
- Fig. 1: eine Längsschnittdarstellung eines Ausführungsbeispiels eines erfindungsgemäßen Kurzschlussläufers für eine Asynchronmaschine,
- Fig. 2: eine perspektivische Ansicht eines weiteren Ausführungsbeispiels eines erfindungsgemäßen Kurzschlussläufers für eine Asynchronmaschine ohne Wellenzapfen,
- Fig. 3: eine perspektivische Ansicht des Kurzschlussläufers nach Fig. 2 mit einem dargestellten Wellenzapfen,
- Fig. 4: eine perspektivische Explosionsdarstellung des Kurzschlussläufers nach Fig. 2 mit 2 dargestellten Wellenzapfen,
- Fig. 5: eine Längsschnittdarstellung durch den Kurzschlussläufer nach Fig. 2 mit zwei dargestellten Wellenzapfen und
- Fig. 6: eine Längsschnittdarstellung eines Ausführungsbeispiels einer erfindungsgemäßen Asynchronmaschine.

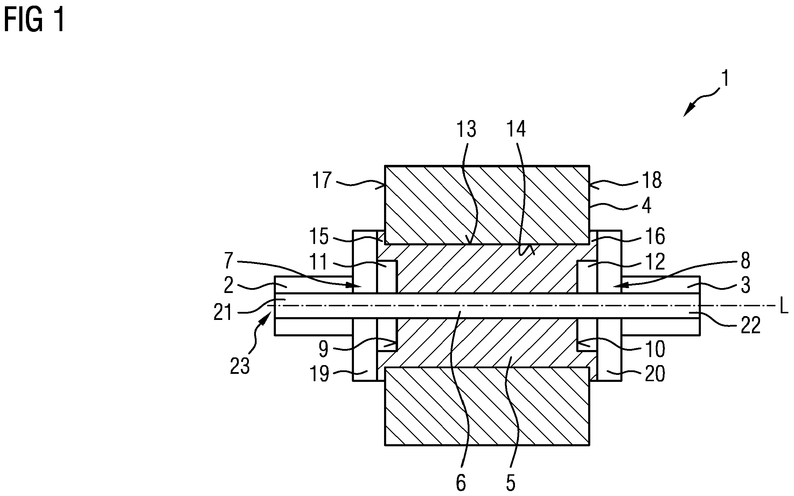

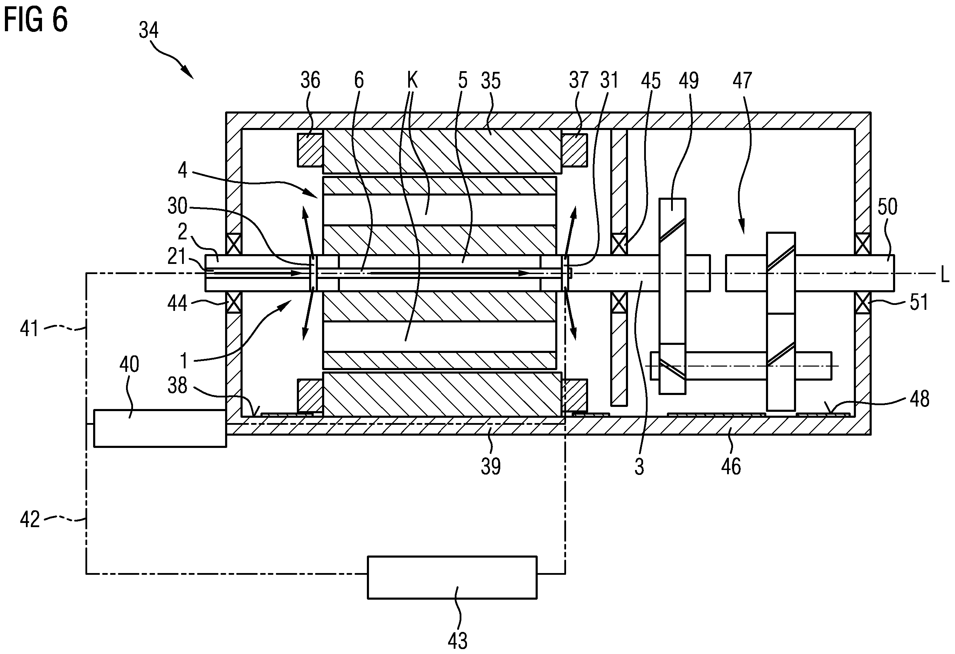

Fig. 1 zeigt einen Kurzschlussläufer 1 für eine Asynchronmaschine, z.B. eine Asynchronmaschine 34 gemäß Fig. 6. Der Kurzschlussläufer 1 umfasst einen ersten Wellenzapfen 2, einen zweiten Wellenzapfen 3, ein Rotorblechpaket 4 und einen Füllkörper 5.

Der Füllkörper 5 ist an das Rotorblechpaket 4 angegossen und derartig mit dem Rotorblechpaket 4 verbunden, z.B. formschlüssig, dass der Füllkörper 5 und das Rotorblechpaket 4 drehfest miteinander verbunden sind. Somit kann ein Drehmoment von dem Füllkörper 5 auf das Rotorblechpaket 4 übertragen werden und umgekehrt. Insbesondere kann eine Rotationsbewegung des Füllkörpers 5 um eine Längsachse L des Kurzschlussläufers 1 auf das Rotorblechpaket 4 übertragen werden, sodass sich auch das Rotorblechpaket 4 um die Längsachse L dreht.

Der Füllkörper 5 ist im Wesentlichen von zylindrischer Gestalt und weist einen ringförmigen Querschnitt auf. Eine zentrale Bohrung 6 durchsetzt den Füllkörper 5 von einer in Fig. 1 links dargestellten ersten Stirnseite 7 des Füllkörpers 5 bis zu einer in Fig. 1 rechts dargestellten zweiten Stirnseite 8 des Füllkörpers 5.
Die erste Stirnseite 7 weist eine erste Ausnehmung 9 auf, und die zweite Stirnseite 8 weist eine zweite Ausnehmung 10 auf. Der erste Wellenzapfen 2 weist an seinem in Fig. 1 rechts dargestellten stirnseitigen Ende einen ersten Zentrierring 11 auf, und der zweite Wellenzapfen 3 weist an seinem in Fig. 1 links dargestellten stirnseitigen Ende einen zweiten Zentrierring 12 auf. Die Form des ersten Zentrierrings 11 korrespondiert mit der Form der ersten Ausnehmung 9, und die Form des zweiten Zentrierrings 12 korrespondiert mit der Form der zweiten Ausnehmung 10. In dem durch Fig. 1 gezeigten Ausführungsbeispiel weisen die Zentrierringe 11 und 12 jeweils einen ringförmigen und zylindrischen Querschnitt mit einem Außendurchmesser auf, welcher einem Innendurchmesser der scheibenförmigen Ausnehmung 9 bzw. 10 entspricht.

Der erste Zentrierring 11 ist in die erste Ausnehmung 9 gesteckt, und der zweite Zentrierring 12 ist in die zweite Ausnehmung 10 gesteckt. Auf diese Weise ist der erste Wellenzapfen 2 mittels der ersten Ausnehmung 9 und dem ersten Zentrierring 11 bezüglich des Füllkörpers 5 ausgerichtet, wobei eine Längsachse L des ersten Wellenzapfens 2 einer Längsachse L des Füllkörpers 5 entspricht. Der erste Wellenzapfen 2 und der Füllkörper 5 sind zu der Längsachse L achsensymmetrisch aufgebaut. Auf ähnliche Weise ist der zweite Wellenzapfen 3 mittels der zweiten Ausnehmung 10 und dem zweiten Zentrierring 12 bezüglich des Füllkörpers 5 ausgerichtet, wobei eine Längsachse L des zweiten Wellenzapfens 3 ebenfalls der Längsachse L des Füllkörpers 5 entspricht und der zweite Wellenzapfen 3 zu der Längsachse L achsensymmetrisch aufgebaut ist.

Der Füllkörper 5 weist an seinem Außenumfang eine dritte Ausnehmung 13 auf, welche sich über einen großen Bereich des Außenumfangs erstreckt. Eine zentrale Bohrung 14 des Rotorblechpakets 4 korrespondiert mit der dritten Ausnehmung 13, wobei insbesondere ein Innendurchmesser der zentralen Bohrung 14 und ein Außendurchmesser der dritten Ausnehmung 13 derart aufeinander abgestimmt sein können, dass zwischen dem Füllkörper 5 und dem Rotorblechpaket eine kraftschlüssige Welle-Nabe-Verbindung geschaffen wird. Die dritte Ausnehmung 13 wird in der Längsrichtung L durch zwei radial verlaufende Endabschnitte 15 und 16 begrenzt. Das Rotorblechpaket 4 weist eine in Fig. 1 links dargestellte erste Stirnseite 17 und eine in Fig. 1 rechts dargestellte zweite Stirnseite 18 auf. Der Füllkörper 5 ist derart mit seinen Endabschnitten 15 und 16 an die Stirnseiten 17 und 18 des Rotorblechpaket 4 angegossen, dass die einzelnen Bleche des Rotorblechpaket 4 durch die Endabschnitte 15 und 16 axial aneinander gepresst werden (Kraftschluss), zumindest aber axial zusammengehalten werden (Formschluss). Auf diese Weise können die Endabschnitte 15 und 16 das Rotorblechpaket 4 zusammenhalten oder verklemmen, d.h. sie erfüllen eine Art "Klammer-Funktion" für das Rotorblechpaket 4, welches durch die Endabschnitte 15 und 16 in der Längsrichtung L zusammengehalten wird.

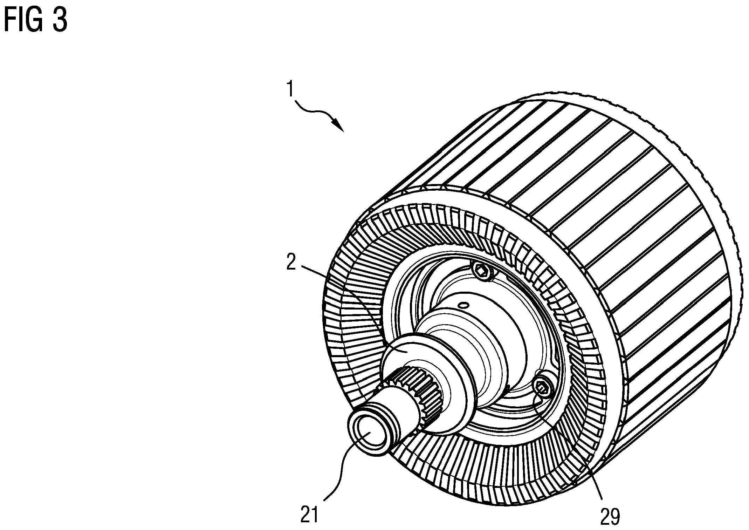

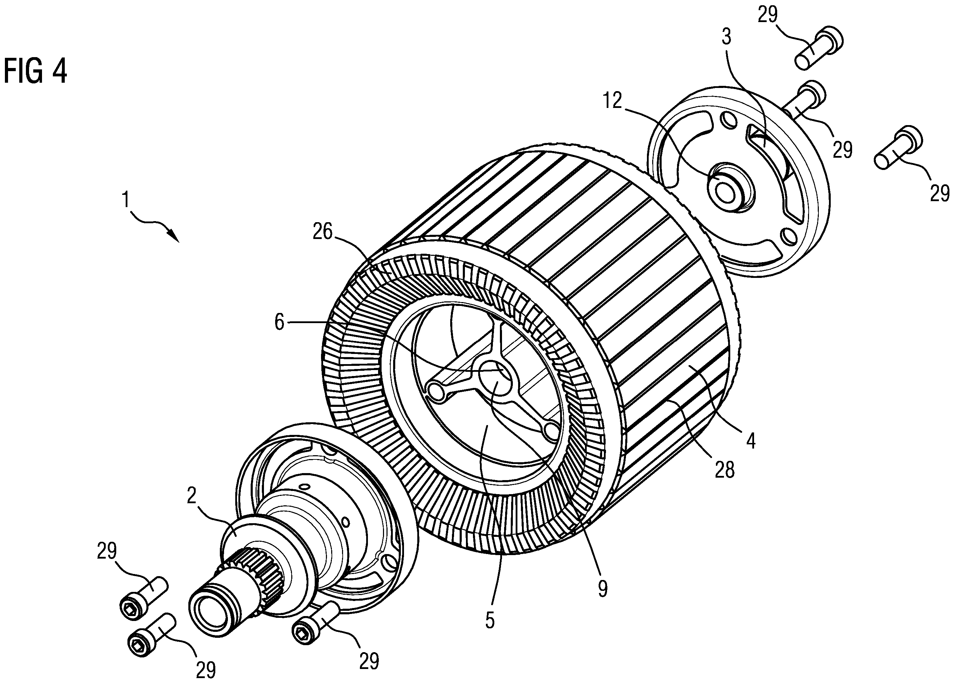

Der erste Wellenzapfen 2 ist formschlüssig und drehfest mit dem Füllkörper 5 verbunden, und der zweite Wellenzapfen 3 ist ebenfalls formschlüssig und drehfest mit dem Füllkörper 5 verbunden. Die Verbindung zwischen den Wellenzapfen 2 bzw. 3 und dem Füllkörper 5 kann beispielsweise mittels einer Schraubenverbindung (vgl. Fig. 3 und 4) erfolgen. Gemäß dem durch Fig. 1 gezeigten Ausführungsbeispiel weist der erste Wellenzapfen 2 dazu einen ersten Anschraubflansch bzw. einen ersten Befestigungsring 19 auf, und der zweite Wellenzapfen 3 weist einen zweiten Anschraubflansch bzw. einen zweiten Befestigungsring 20 auf. Die Befestigungsringe 19 und 20 sind von zylindrische Gestalt und weisen einen ringförmigen Querschnitt auf, wobei ein Außendurchmesser der Befestigungsringe 19 und 20 jeweils größer ist als der Außendurchmesser der Zentrierringe 11 und 12. Die Befestigungsringe 19 und 20 liegen jeweils mit einer ihrer Stirnseiten an einer der Stirnseiten 7 bzw. 8 des Füllkörpers 5 an. Im Bereich dieser Anlageflächen können die Wellenzapfen 2 und 3 mit dem Füllkörper 5 beispielsweise verschraubt sein.

Durch die drehfeste Verbindung zwischen dem Füllkörper 5 und dem ersten Wellenzapfen 2 einerseits sowie den zweiten Wellenzapfen 3 andererseits können Drehmomente zwischen den Wellenzapfen 2 und 3 und dem Füllkörper 5 übertragen werden. Insbesondere kann eine Rotationsbewegung des ersten Wellenzapfens 2 und/oder des zweiten Wellenzapfens 3 auf den Füllkörper 5 übertragen werden. Durch die drehfeste Verbindung zwischen dem Füllkörper 5 und dem Rotorblechpaket 4 (siehe oben) können auch Rotationsbewegungen und Drehmomente von dem Füllkörper 5 auf das Rotorblechpaket 4 übertragen werden. Folglich können Rotationsbewegungen und Drehmomente von dem ersten Wellenzapfen 2 und/oder dem zweiten Wellenzapfen 3 über den Füllkörper 5 auf das Rotorblechpaket 4 übertragen werden.

Der erste Wellenzapfen 2 weist eine zentrale erste Bohrung 21 auf, und der zweite Wellenzapfen 3 weist eine zentrale zweite Bohrung 22 auf. Die Bohrungen 21 und 22 durchsetzen die Wellenzapfen 2 und 3 derart in der Längsrichtung L, dass die Bohrungen 21 und 22 entgegengesetzte Stirnseiten der Wellenzapfen 2 bzw. 3 miteinander verbinden. Dabei fluchten die Bohrungen 21 und 22 der Wellenzapfen 2 und 3 mit der zentralen Bohrung 6 ("dritte Bohrung") des Füllkörpers 5. Somit sind die Bohrungen 21 und 22 der Wellenzapfen 2 und 3 mit der zentralen Bohrung 6 des Füllkörpers 5 verbunden, wodurch ein Kühlkanal 23 ausgebildet wird, welcher in der Längsrichtung L durch den gesamten Kurzschlussring 1 verläuft. Durch den Kühlkanal 23 kann insbesondere eine Kühlflüssigkeit, z.B. ein Öl oder ein Ölnebel, geleitet werden, wodurch die Wellenzapfen 2 und 3 und der Füllkörper 5 von innen gekühlt werden können.

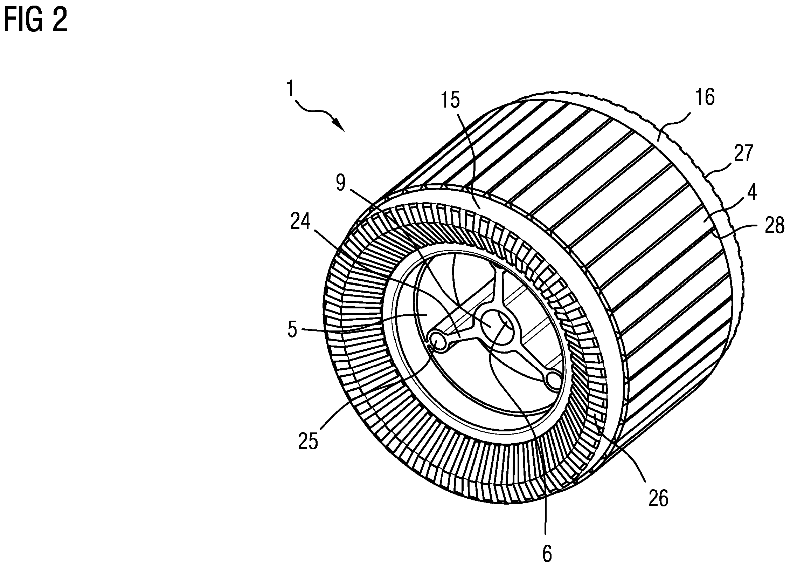

Fig. 2 bis 5 zeigen, wie ein Kurzschlussring 1, z.B. der Kurzschlussring 1 nach Fig. 1, im Detail ausgestattet sein kann. Wie aus Fig. 2 ersichtlich, füllt der Füllkörper 5 nicht den gesamten Hohlraum innerhalb der zentralen Bohrung 14 des Rotorblechpakets 4 aus. Der Füllkörper 5 bildet drei jeweils um 120° versetzt zueinander angeordnete Speichen 24 aus, welche jeweils in ihren radial äußeren Endbereichen eine Gewindebohrung 25 aufweisen, welche jeweils einer Verschraubung mit dem Wellenzapfen 2 bzw. 3 dient. Durch die drei Speichen 24 weist der Füllkörper 5 eine hohe Stabilität bei gleichzeitig geringem Gewicht auf.

Der Kurzschlussläufer 1 gemäß Fig. 2 umfasst ferner einen ersten Kurzschlussring 26 an seiner Vorderseite und einen zweiten Kurzschlussring 27 an seiner Hinterseite, wobei der zweite Kurzschlussring 27 ähnlich wie der erste Kurzschlussring 26 ausgeführt ist. Die Kurzschlussringe 26 und 27 sind über mehrere Kurzschlussstäbe 28 miteinander verbunden, welche in Nuten des Rotorblechpakets 4 aufgenommen sind. Die Nuten bzw. die Kurzschlussstäbe 28 verlaufen parallel zueinander und parallel zu der Längsachse L. Weiterhin sind die Kurzschlussstäbe 28 in einer Umfangsrichtung des Rotorblechpakets 4 jeweils äquidistant voneinander beabstandet.
Der Kurzschlussring 1 nach Fig. 2 kann beispielsweise hergestellt werden, indem zunächst einzelne Bleche derart gestanzt und gestapelt werden, dass das Rotorblechpaket 4 wie durch Fig. 2 gezeigt bereitgestellt ist. Die Kurzschlussstäbe 28 können hergestellt werden, in dem eine Druckgussvorrichtung (nicht gezeigt) beispielsweise im Bereich einer der Stirnseiten des Rotorblechpakets 4 platziert wird und die Nuten durch einen Durchlass (in der Druckgussvorrichtung) mit einer Schmelze gefüllt werden, wobei die mit erstarrter Schmelze gefüllten Nuten die Kurzschlussstäbe 28 des Kurzschlussläufers 1 bilden.

Bei der Schmelze kann es sich insbesondere um eine geschmolzene Leichtmetalllegierung auf der Basis von Aluminium handeln. Die Kurzschlussringe 26 und 27 können hergestellt werden, indem eine Schmelze an das Rotorblechpaket 4 und an die Kurzschlussstäbe 28 angegossen wird. Bei der Schmelze kann es sich um die gleiche Schmelze handeln, welche auch für die Herstellung der Kurzschlussstäbe 28 verwendet wird. Der Füllkörper 5 kann hergestellt werden, indem eine Schmelze an das Rotorblechpaket 4 angegossen wird, sodass das Rotorblechpaket 4 drehfest auf dem Füllkörper 5 gelagert ist. Bei der Schmelze für die Herstellung des Füllkörpers 5 kann es sich um die gleiche Schmelze handeln, welche auch für die Herstellung der Kurzschlussstäbe 28 und für die Herstellung der Kurzschlussringe 26 verwendet wird.

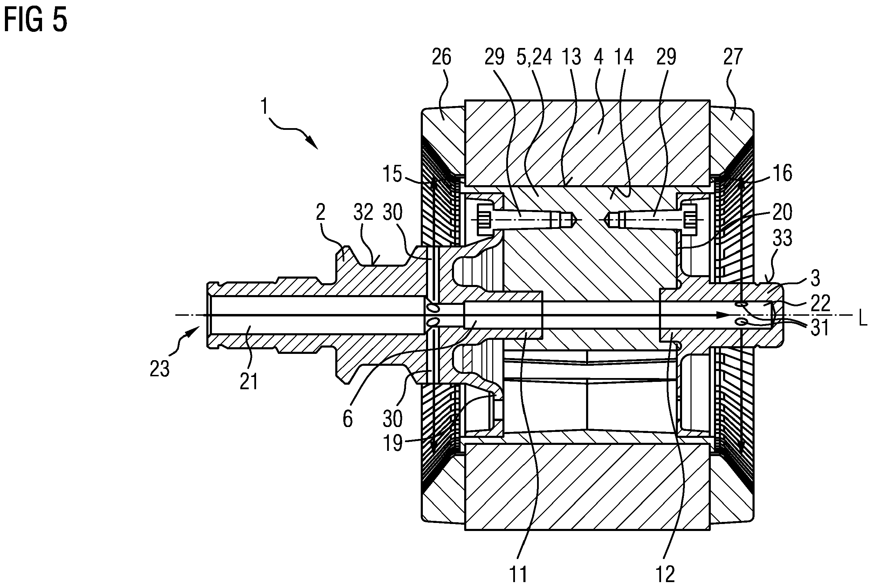

Fig. 3 bis 5 zeigen den Kurzschlussläufer nach Fig. 2, wobei zusätzlich ein erster Wellenzapfen 2 gezeigt ist, welcher mittels Befestigungsmitteln 29 in Form von 3 Schrauben an der Vorderseite des Füllkörpers 5 befestigt ist, wobei die drei Schrauben 29 in die drei Gewindebohrungen 25 (Fig. 2) geschraubt sind. An der Hinterseite des Füllkörpers 5 ist ein zweiter Wellenzapfen 3 (Fig. 4 und 5) auf ähnliche Art und Weise befestigt wie der erste Wellenzapfen.

Wie besonders gut aus Fig. 5 ersichtlich, weist der erste Wellenzapfen 2 mehrere in Umfangsrichtung verteilte erste radiale Bohrungen 30 auf, und der zweite Wellenzapfen 3 weist mehrere in Umfangsrichtung verteilte zweite radiale Bohrungen 31 auf. Die radialen Bohrungen 30 und 31 verlaufen senkrecht zu der Längsachse L des Kurzschlussläufers 1, wobei die ersten radialen Bohrungen 30 die erste axiale Bohrung 21 des ersten Wellenzapfens 2 mit einer ersten Außenumfangsfläche 32 des ersten Wellenzapfens 2 verbinden, und die zweiten radialen Bohrungen 31 die zweite axiale Bohrung 22 des zweiten Wellenzapfens 3 mit einer zweiten Außenumfangsfläche 33 des zweiten Wellenzapfens 3 verbinden.

Durch den Kühlkanal 23 kann ein Kühlmedium, z.B. ein Öl oder ein Ölnebel, geleitet werden. Eine mögliche Fließrichtung des Kühlmediums innerhalb des Kühlkanals 23 ist in Fig. 5 durch Pfeile veranschaulicht. Das Kühlmedium kann beispielsweise mittels einer nicht gezeigten Pumpe durch den Kühlkanal 23 gefördert werden. Alternativ kann das Rotorblechpaket 4 schraubenspindelförmige Kühlkanäle aufweisen, welche bei einer Rotation des Rotorblechpakets eine Sogwirkung ermöglichen, mittels welcher das Kühlmedium ohne die Notwendigkeit einer Pumpe in den Kühlkanal 23 angesaugt, durch ihn geleitet und aus ihm heraus gefördert wird.
Bei einer Rotation des ersten Wellenzapfens 2 und des zweiten Wellenzapfens 3 wird das Kühlmedium, welches sich innerhalb des Kühlkanals 23 befindet, durch auf das Kühlmedium innerhalb der radialen Bohrungen 30 und 31 wirkende Fliehkräfte durch die radialen Bohrungen 30 und 31 gefördert und aus ihnen in radialer Richtung herausgeschleudert. Wie insbesondere aus Fig. 5 ersichtlich, ist die erste radiale Bohrung 30 des ersten Wellenzapfens 2 in radialer Richtung von dem ersten Kurzschlussring 26 umgeben, und die zweite radiale Bohrung 31 des zweiten Wellenzapfens 3 ist in radialer Richtung von dem zweiten Kurzschlussring 27 umgeben. Das aus den radialen Bohrungen 30 und 31 herausgeschleuderte Kühlmedium trifft in seinem weiteren Bewegungsverlauf auf den ersten Kurzschlussring 26 bzw. zweiten Kurzschlussring 27 und kühlt diese.

Fig. 6 zeigt eine Asynchronmaschine 34 mit einem Kurzschlussläufer 1, welcher ähnlich aufgebaut sein kann wie die Kurzschlussläufer nach Fig. 1 bis 5. Der Kurzschlussläufer 1 ist in radialer Richtung umgeben von einem Stator 35 mit einem ersten Statorwickelkopf 36, welcher in Fig. 6 links dargestellt ist, und mit einem zweiten Statorwickelkopf 37, welcher in Fig. 6 rechts dargestellt ist. Die Statorwickelköpfe 36 und 37 umgeben jeweils einen nicht durch Fig. 6 gezeigten Kurzschlussring des Kurzschlussläufers 1 (vgl. hierzu z.B. Fig. 2 bis 5). Das Rotorblechpaket 4 des Kurzschlussläufers 1 umfasst weiterhin eingestanzte Kühlkanäle K.

Ein erster Wellenzapfen 2 des Kurzschlussläufers 1 weist - ähnlich wie durch Fig. 2 bis 5 gezeigt - mehrere in Umfangsrichtung verteilte radiale erste Bohrungen 30 auf. Ein zweiter Wellenzapfen 3 des Kurzschlussläufers 1 weist ebenfalls - ähnlich wie durch Fig. 2 bis 5 gezeigt - mehrere in Umfangsrichtung verteilte zweite radiale Bohrungen 31 auf. Der erste Statorwickelkopf 36 umgibt die radialen ersten Bohrungen 30 in radialer Richtung, und der zweite Statorwickelkopf 36 umgibt die radialen zweiten Bohrungen 31. Bei einer Rotation des ersten Wellenzapfens 2, des Füllkörpers 5 sowie des zweiten Wellenzapfens 3 wird - wie im Zusammenhang mit Fig. 5 beschrieben - Kühlmedium, welches sich innerhalb eines Kühlkanals 23 des Kurzschlussläufers 1 befindet, durch den Kühlkanal 23 gefördert und aus den radialen Bohrungen 30 und 31 heraus in Richtung der Statorwickelköpfe 36 und 37 geschleudert. Das aus den radialen Bohrungen 30 und 31 herausgeschleuderte Kühlmedium trifft in seinem weiteren Bewegungsverlauf insbesondere auf die Statorwickelköpfe 36 und 37 und kühlt diese. Anschließend tropft das Kühlmedium in einen Sumpf 38 eines ersten Gehäuseabschnitts 39 der Asynchronmaschine 34 ab. Das Kühlmedium, welches durch den Kühlkanal 23 geleitet wird und nach einer Kühlung insbesondere der Statorwickelköpfe 36 und 37 in den Sumpf 38 abgetropft ist, kann durch einen Wärmetauscher 40 geleitet werden, um dort rückgekühlt zu werden. Eine Förderung des Kühlmediums aus dem Sumpf 38 durch den Wärmetauscher 40 und durch den Kühlkanal 23 kann mittels einer nicht gezeigten Pumpe erfolgen oder durch spiralförmige Kühlkanäle innerhalb des Rotorblechpakets 4, wie dies im Zusammenhang mit Fig. 5 beschrieben worden ist. Auf diese Weise wird ein Umlauf-Kühlkreislauf 41 gebildet, dessen möglicher Verlauf in Fig. 6 mit einer Strichpunkt-Linie verdeutlicht ist. Zur Rückkühlung des Kühlmediums innerhalb des Wärmetauschers 40 wird dieser durch Kühlwasser durchströmt, welches in einem Haupt-Kühlkreislauf 42 zirkuliert, innerhalb welchem sich ein Hauptwasserkühler 43 zur Rückkühlung des Kühlwassers befindet. Das Kühlwasser kann innerhalb des Haupt-Kühlkreislaufs 42 mittels einer nicht gezeigten Pumpe zirkulieren.

Fig. 6 zeigt weiterhin, dass der erste Wellenzapfen 2 drehbar in einem ersten Lager 44 gelagert ist, welches innerhalb des ersten Gehäuseabschnitts 39 befestigt ist, und dass der zweite Wellenzapfen 3 drehbar in einem zweiten Lager 45 gelagert ist, welches ebenfalls innerhalb des ersten Gehäuseabschnitts 39 befestigt ist. In einem zweiten Gehäuseabschnitt 46 befindet sich ein Getriebe 47 mit einem weiteren Sumpf 48. Das Getriebe 47 ist über ein erstes Zahnrad 49 mit dem zweiten Wellenzapfen 3 verbunden, wobei eine Ausgangswelle 50 des Getriebes 47 in einem dritten Lager 51 drehbar gelagert ist und aus dem zweiten Gehäuseabschnitt herausragt, wobei das dritte Lager 51 innerhalb des zweiten Gehäuseabschnitts 46 befestigt ist.

## Patentansprüche

1. Kurzschlussläufer (1) für eine Asynchronmaschine (34), der Kurzschlussläufer (1) umfassend:
- einen ersten Wellenzapfen (2),
- einen zweiten Wellenzapfen (3),
- ein Rotorblechpaket (4) und
- einen Füllkörper (5),
wobei
- der Füllkörper (5) an das Rotorblechpaket (4) angegossen ist, sodass das Rotorblechpaket (4) drehfest auf dem Füllkörper (5) gelagert ist, und
- der Füllkörper (5) drehfest mit den Wellenzapfen (2, 3) verbunden ist, sodass ein Drehmoment von den Wellenzapfen (2, 3) auf das Rotorblechpaket (4) übertragen wird, **dadurch gekennzeichnet, dass**
- der erste Wellenzapfen (2) eine erste axiale Bohrung (21) aufweist,
- der zweite Wellenzapfen (3) eine zweite axiale Bohrung (22 aufweist, und
- der Füllkörper (5) eine dritte axiale Bohrung (6) aufweist, wobei die dritte axiale Bohrung (6) die erste axiale Bohrung (21) mit der zweiten axialen Bohrung (22) verbindet, sodass die erste Bohrung (21), die zweite Bohrung (22) und die dritte Bohrung (6) gemeinsam einen Kühlkanal (23) ausbilden, welcher durch den ersten Wellenzapfen (2), den Füllkörper (5) und den zweiten Wellenzapfen (3) verläuft.

2. Kurzschlussläufer (1) nach Anspruch 1, der Kurzschlussläufer (1) weiterhin umfassend:
- einen ersten Kurschlussring (26) und
- einen zweiten Kurzschlussring (27),
wobei
- der erste Wellenzapfen (2) eine erste radiale Bohrung (30) aufweist, und
- der zweite Wellenzapfen (3) eine zweite radiale Bohrung (31) aufweist,
wobei
- die erste radiale Bohrung (30) mit der ersten axialen (21) Bohrung verbunden ist,
- die zweite radiale Bohrung (31) mit der zweiten axialen Bohrung (22) verbunden ist,
- der erste Kurzschlussring (26) die erste radiale Bohrung (30) radial umgibt, und
- der zweite Kurzschlussring (27) die zweite radiale Bohrung (31) radial umgibt,
sodass bei einer Rotation der Wellenzapfen (2, 3) ein Kühlmedium aus den radialen Bohrungen (30, 31) radial nach außen in Richtung der Kurzschlussringe (26, 27) geschleudert werden kann und die Kurzschlussringe (26, 27) kühlen kann.

3. Kurzschlussläufer (1) nach einem der vorstehenden Ansprüche, wobei das Rotorblechpaket (4) in axialer Richtung formschlüssig und kraftschlüssig mit dem Füllkörper (5) verbunden ist.

4. Kurzschlussläufer (1) nach einem der vorstehenden Ansprüche, wobei die Wellenzapfen (2, 3) jeweils einen stirnseitig angeordneten Ansatz (11, 12) zur Zentrierung aufweisen.

5. Kurzschlussläufer (1) nach einem der vorstehenden Ansprüche, wobei die Wellenzapfen (2, 3) jeweils eine stirnseitig angeordnete Endscheibe (19, 20) zur Befestigung mit dem Füllkörper (5) aufweisen.

6. Kurzschlussläufer (1) nach einem der vorstehenden Ansprüche, wobei der Füllkörper (5) wenigstens drei sich in radialer Richtung erstreckende Speichen (24) ausbildet.

7. Asynchronmaschine (34) umfassend
- einen Kurzschlussläufer (1) nach einem der Ansprüche 2 bis 6,
- einen Stator (35),
- einen ersten Statorwickelkopf (36), und
- einen zweiten Statorwickelkopf (37),
wobei
- der erste Statorwickelkopf (36) den ersten Kurzschlussring (26) umgibt, und
- der zweite Statorwickelkopf (37) den zweiten Kurzschlussring (26) umgibt,
sodass bei einer Rotation der Wellenzapfen (2, 3) ein Kühlmedium aus den radialen Bohrungen (30, 31) radial nach außen in Richtung der Statorwickelköpfe (36, 37) geschleudert werden kann und die Statorwickelköpfe (36, 37) kühlen kann.

8. Verfahren zur Herstellung eines Kurzschlussläufers (1) nach einem der vorstehenden Ansprüche, der Kurzschlussläufer (1) umfassend
- einen ersten Kurzschlussring (26),
- einen zweiten Kurzschlussring (27), und
- mehrere Kurzschlussstäbe (28),
wobei
- das Rotorblechpaket (4) Nuten für die Kurzschlussstäbe (28) ausbildet, und
- die Kurschlussstäbe (28) jeweils mit dem ersten Kurzschlussring (26) und mit dem zweiten Kurzschlussring (27) verbunden sind, das Verfahren umfassend die Schritte:
- Bereitstellen des Rotorblechpakets (4),
- Herstellen der Kurzschlussstäbe (28) durch Füllen der Nuten mit einer Schmelze mittels Druckgießen,
- Herstellen der Kurzschlussringe (26, 27) durch Angießen einer Schmelze an das Rotorblechpaket (4) und an die Kurzschlussstäbe (28),
- Herstellen des Füllkörpers (5) durch Angießen einer Schmelze an das Rotorblechpaket (4), sodass das Rotorblechpaket (4) drehfest auf dem Füllkörper (5) gelagert ist, **gekennzeichnet durch**
- Befestigen des Füllkörpers (5) an den Wellenzapfen (2, 3) mittels Befestigungsmitteln (29).

## Claims

1. Squirrel-cage rotor (1) for an asynchronous machine (34), the squirrel-cage rotor (1) comprising:
- a first shaft journal (2),
- a second shaft journal (3),
- a laminated rotor core (4) and
- a filler body (5),
wherein
- the filler body (5) is cast onto the laminated rotor core (4), so that the laminated rotor core (4) is mounted on the filler body (5) in a rotationally fixed manner, and
- the filler body (5) is connected to the shaft journals (2, 3) in a rotationally fixed manner, so that a torque is transmitted from the shaft journals (2, 3) to the laminated rotor core (4), **characterized in that**
- the first shaft journal (2) has a first axial bore (21),
- the second shaft journal (3) has a second axial bore (22), and
- the filler body (5) has a third axial bore (6),
wherein the third axial bore (6) connects the first axial bore (21) to the second axial bore (22), so that the first bore (21), the second bore (22) and the third bore (6) together form a cooling duct (23) which runs through the first shaft journal (2), the filler body (5) and the second shaft journal (3) .

2. Squirrel-cage rotor (1) according to Claim 1, the squirrel-cage rotor (1) further comprising:
- a first short-circuiting ring (26) and
- a second short-circuiting ring (27),
wherein
- the first shaft journal (2) has a first radial bore (30), and
- the second shaft journal (3) has a second radial bore (31),
wherein
- the first radial bore (30) is connected to the first axial bore (21),
- the second radial bore (31) is connected to the second axial bore (22),
- the first short-circuiting ring (26) radially surrounds the first radial bore (30), and
- the second short-circuiting ring (27) radially surrounds the second radial bore (31),
so that, in the event of rotation of the shaft journals (2, 3), a cooling medium can be centrifuged out of the radial bores (30, 31) radially to the outside in the direction of the short-circuiting rings (26, 27) and can cool the short-circuiting rings (26, 27).

3. Squirrel-cage rotor (1) according to one of the preceding claims, wherein the laminated rotor core (4) is connected to the filler body (5) in an interlocking and force-fitting manner in the axial direction.

4. Squirrel-cage rotor (1) according to one of the preceding claims, wherein the shaft journals (2, 3) each have an attachment (11, 12) which for centring is arranged on the end side.

5. Squirrel-cage rotor (1) according to one of the preceding claims, wherein the shaft journals (2, 3) each have an end plate (19, 20) which for fastening to the filler body (5) is arranged on the end side.

6. Squirrel-cage rotor (1) according to one of the preceding claims, wherein the filler body (5) forms at least three spokes (24) which extend in the radial direction.

7. Asynchronous machine (34) comprising
- a squirrel-cage rotor (1) according to one of Claims 2 to 6,
- a stator (35),
- a first stator end winding (36), and
- a second stator end winding (37),
wherein
- the first stator end winding (36) surrounds the first short-circuiting ring (26), and
- the second stator end winding (37) surrounds the second short-circuiting ring (26),
so that, in the event of rotation of the shaft journals (2, 3), a cooling medium can be centrifuged out of the radial bores (30, 31) radially to the outside in the direction of the stator end windings (36, 37) and can cool the stator end windings (36, 37).

8. Method for producing a squirrel-cage rotor (1) according to one of the preceding claims, the squirrel-cage rotor (1) comprising
- a first short-circuiting ring (26),
- a second short-circuiting ring (27), and
- a plurality of short-circuiting bars (28),
wherein
- the laminated rotor core (4) forms slots for the short-circuiting bars (28), and
- the short-circuiting bars (28) are each connected to the first short-circuiting ring (26) and to the second short-circuiting ring (27),
the method comprising the steps of:
- providing the laminated rotor core (4),
- producing the short-circuiting bars (28) by filling the slots with a melt by means of die-casting,
- producing the short-circuiting rings (26, 27) by casting a melt onto the laminated rotor core (4) and onto the short-circuiting bars (28),
- producing the filler body (5) by casting a melt onto the laminated rotor core (4), so that the laminated rotor core (4) is mounted on the filler body (5) in a rotationally fixed manner,
**characterized by**
- fastening the filler body (5) to the shaft journals (2, 3) by means of fastening means (29).

## Revendications

1. Rotor en court-circuit (1) pour une machine asynchrone (34), le rotor en court-circuit (1) comprenant :
- un premier tourillon d'arbre (2),
- un deuxième tourillon d'arbre (3),
- un paquet de tôles rotoriques (4), et
- un corps de remplissage (5),
dans lequel
- le corps de remplissage (5) est coulé sur le paquet de tôles rotoriques (4) de sorte que le paquet de tôles rotoriques (4) est monté solidaire en rotation sur le corps de remplissage (5), et
- le corps de remplissage (5) est relié solidaire en rotation aux tourillons d'arbre (2, 3) de sorte qu'un couple est transmis des tourillons d'arbre (2, 3) au paquet de tôles rotoriques (4),
**caractérisé en ce que**
- le premier tourillon d'arbre (2) présente un perçage axial (21),
- le deuxième tourillon d'arbre (3) présente un deuxième perçage axial (22), et
- le corps de remplissage (5) présente un troisième perçage axial (6), le troisième perçage axial (6) reliant le premier perçage axial (21) au deuxième perçage axial (22) de sorte que le premier perçage (21), le deuxième perçage (22) et le troisième perçage (6) réalisent ensemble un canal de refroidissement (23) qui s'étend à travers le premier tourillon d'arbre (2), le corps de remplissage (5) et le deuxième tourillon d'arbre (3).

2. Rotor en court-circuit (1) selon la revendication 1, le rotor en court-circuit (1) comprenant en outre :
- une première bague de court-circuit (26), et
- une deuxième bague de court-circuit (27),
dans lequel
- le premier tourillon d'arbre (2) présente un premier perçage radial (30), et
- le deuxième tourillon d'arbre (3) présente un deuxième perçage radial (31),
dans lequel
- le premier perçage radial (30) est relié au premier perçage axial (21),
- le deuxième perçage radial (31) est relié au deuxième perçage axial (22),
- la première bague de court-circuit (26) entoure radialement le premier perçage radial (30), et
- la deuxième bague de court-circuit (27) entoure radialement le deuxième perçage radial (31),
de sorte que lors d'une rotation des tourillons d'arbre (2, 3), un agent de refroidissement peut être éjecté des perçages radiaux (30, 31) radialement vers l'extérieur en direction des bagues en court-circuit (26, 27) et peut refroidir les bagues en court-circuit (26, 27).

3. Rotor en court-circuit (1) selon l'une quelconque des revendications précédentes, le paquet de tôles rotoriques (4) étant relié au corps de remplissage (5) dans la direction axiale par complémentarité de forme et par adhérence.

4. Rotor en court-circuit (1) selon l'une quelconque des revendications précédentes, dans lequel les tourillons d'arbre (2, 3) présentent respectivement un rebord (11, 12) de centrage disposé sur la face frontale.

5. Rotor en court-circuit (1) selon l'une quelconque des revendications précédentes, dans lequel les tourillons d'arbre (2, 3) présentent respectivement un disque d'extrémité (19, 20) disposé sur la face frontale pour la fixation sur le corps de remplissage (5).

6. Rotor en court-circuit (1) selon l'une quelconque des revendications précédentes, le corps de remplissage (5) réalisant au moins trois rayons (24) s'étendant dans la direction radiale.

7. Machine asynchrone (34), comprenant
- un rotor en court-circuit (1) selon l'une quelconque des revendications 2 à 6,
- un stator (35),
- une première tête d'enroulement statorique (36), et
- une deuxième tête d'enroulement statorique (37),
dans lequel
- la première tête d'enroulement statorique (36) entoure la première bague de court-circuit (26), et
- la deuxième tête d'enroulement statorique (37) entoure la deuxième bague de court-circuit (26),
de sorte que lors d'une rotation des tourillons d'arbre (2, 3) un agent de refroidissement peut être éjecté des perçages radiaux (30, 31) radialement vers l'extérieur en direction des têtes d'enroulement statoriques (36, 37) et peut refroidir les têtes d'enroulement statoriques (36, 37).

8. Procédé de fabrication d'un rotor en court-circuit (1) selon l'une quelconque des revendications précédentes, le rotor en court-circuit (1) comprenant
- une première bague de court-circuit (26),
- une deuxième bague de court-circuit (27), et
- plusieurs barres de court-circuit (28),
dans lequel
- le paquet de tôles rotoriques (4) constitue des rainures pour les barres de court-circuit (28), et
- les barres de court-circuit (28) sont reliées à la première bague de court-circuit (26) et à la deuxième bague de court-circuit (27) respectivement,
le procédé comprenant les étapes consistant à :
- fournir l'empilement de tôles rotoriques (4),
- fabriquer les barres de court-circuit (28) en remplissant les rainures d'une masse fondue au moyen d'une coulée sous pression,
- fabriquer les bagues de court-circuit (26, 27) en coulant une masse fondue sur le paquet de tôles rotoriques (4) et sur les barres de court-circuit (28),
- fabriquer le corps de remplissage (5) en coulant une masse fondue sur le paquet de tôles rotoriques (4) de sorte que le paquet de tôles rotoriques (4) est monté solidaire en rotation sur le corps de remplissage (5),
**caractérisé par**
- la fixation du corps de remplissage (5) aux tourillons d'arbre (2, 3) à l'aide de moyens de fixation (29).
